(19) Europäisches Patentamt
European Patent Office
Office européen des brevets

(11) **EP 4 446 767 A1**

(12) **EUROPEAN PATENT APPLICATION**

(43) Date of publication:
**16.10.2024 Bulletin 2024/42**

(21) Application number: **24164371.7**

(22) Date of filing: **19.03.2024**

(51) International Patent Classification (IPC):
**G01S 7/35** $^{(2006.01)}$    **G01S 13/72** $^{(2006.01)}$
**G01S 13/42** $^{(2006.01)}$    **G01S 13/34** $^{(2006.01)}$
**G01S 13/524** $^{(2006.01)}$    **G01S 13/931** $^{(2020.01)}$

(52) Cooperative Patent Classification (CPC):
**G01S 13/726; G01S 7/354; G01S 13/42;**
G01S 7/356; G01S 13/345; G01S 13/5246;
G01S 13/931

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.04.2023 RO 202300179**

(71) Applicant: **NXP B.V.**
**5656 AG Eindhoven (NL)**

(72) Inventors:
• **Rosu, Filip Alexandru**
**5656 AG Eindhoven (NL)**
• **Girdianu, Alexandru**
**5656 AG Eindhoven (NL)**
• **Suciu, Ioana Cristina**
**5656 AG Eindhoven (NL)**

(74) Representative: **Schmütz, Christian Klaus
Johannes
NXP Semiconductors Germany GmbH
Intellectual Property Group
Beiersdorfstr. 12
22529 Hamburg (DE)**

(54) **METHOD AND APPARATUS FOR ESTIMATING A DIRECTION OF ARRIVAL**

(57)    A system includes a processor and a non-transitory computer-readable medium storing machine instructions executable by the processor. The processor obtains an input radar signal, determines coefficients for an auto-regressive model based on the input signal and an order size, and extrapolates the input signal based on the model and the determined coefficients to obtain an extrapolated signal. In some implementations, the input signal comprises a number N of samples, and the order size is approximately half of N. The coefficients are determined based on the N samples, and the processor extrapolates a right-side signal based on the model, the determined coefficients, and a second half of the N samples; extrapolates a left-side signal based on the model, complex conjugates of the determined coefficients, and a first half of the N samples; and generates the extrapolated signal based on the left-side signal, the input signal, and the right-side signal.

FIG. 3

Processed by Luminess, 75001 PARIS (FR)

**Description**

## BACKGROUND

Some radar systems are included in vehicles as part of automated driving assistance systems and used to assist in perception of environments around the vehicles. To accurately represent the environment, the angle or direction of arrival of a signal reflected off an object in the environmental relative to a radar system is determined. The angular resolution for a phased array radar system is dependent on the aperture size and can be improved by increasing the size of the array, using super-resolution algorithms, creating a synthetic aperture radar system, or a combination of techniques.

Increasing the size of the array and the number of receiver channels such that grating lobes are avoided increases the size of the radar system on an integrated circuit, which may not be possible in some implementations. Increasing the size of the array without increasing the number of receiver channels results in a sparse array, which maintains the size of the radar system on an integrated circuit, but requires computationally expensive sparse processing algorithms. Super-resolution algorithms and algorithms for processing synthetic aperture radar data are computationally expensive as well and have other drawbacks. For example, some super-resolution algorithms have limited maximum unambiguous detection ranges and require that the number of targets in an environment be a priori known, which is not always possible in an automated driving assistance system implementation. As another example, synthetic aperture radar systems cannot be used in boresight.

## BRIEF DESCRIPTION OF THE DRAWINGS

The present invention may be better understood, and its numerous objects, features, and advantages made apparent to those skilled in the art by referencing the accompanying drawings.

FIG. 1 shows, in block diagram form, an example radar system, according to one embodiment.
FIG. 2 shows, in flow chart form, an example process for analyzing received radar data, according to one embodiment.
FIG. 3 shows a diagram of received and extrapolated signals and a process for generating the extrapolated signal, according to one embodiment.
FIG. 4 shows, in flow chart form, an example process for extrapolating a signal, according to one embodiment.
FIG. 5 shows, in flow chart form, another example process for extrapolating a signal, according to one embodiment.
FIG. 6 shows, in flow chart form, a further example process for extrapolating a signal, according to one embodiment.
FIG. 7 shows, in block diagram form, an example processing system for extrapolating a signal, according to one embodiment.
FIG. 8 shows a diagram of a vectorized extrapolation process, according to one embodiment.

The use of the same reference symbols in different drawings indicates identical items unless otherwise noted. The Figures are not necessarily drawn to scale.

## DETAILED DESCRIPTION

As discussed previously herein, some techniques for improving the angular resolution of a phased array radar system are computationally expensive and have other drawbacks, such as increasing the size of the radar system, limited maximum unambiguous detection ranges, and the like. The disclosed techniques and radar systems implementing the disclosed techniques are able to extrapolate an input radar signal such that the angle or direction of arrival can be determined based on additional signal samples, balancing improved angular resolution with computational complexity without increasing the size of the radar system on an integrated circuit.

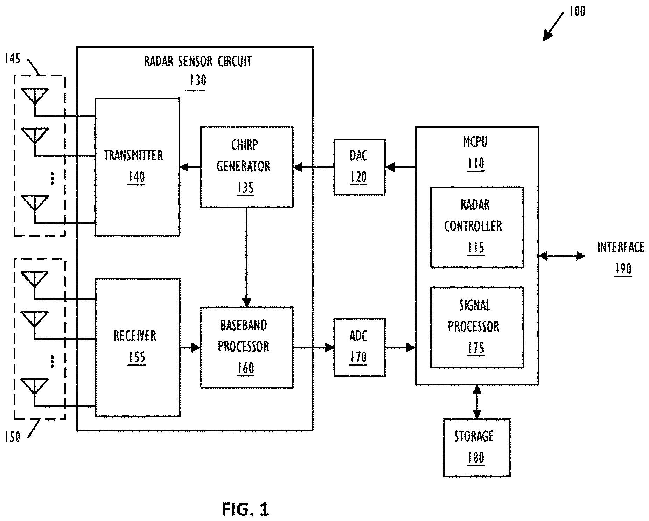

FIG. 1 shows, in block diagram form, an example radar system 100, according to an embodiment. Radar system 100 can be included in a vehicle, such as for an automotive driver assistance system. The example radar system 100 is a frequency-modulated continuous wave (FMCW) radar system, also referred to as a continuous-wave frequency-modulated (CWFM) radar, and capable of determining the distance or range, velocity, and angle of arrival of an object in the field of view of radar system 100. The term "angle of arrival" or "direction of arrival" of an object is used herein to indicate the angle of arrival of a signal reflected off the object relative to the alignment of the radar system. Although radar system 100 is described herein as a linear chirp radar system, any appropriate radar system that generates range-Doppler information can be used.

In this example, radar system 100 includes a microcontroller and processor unit (MCPU) 110, a digital-to-analog converter (DAC) 120, a radar sensor circuit 130, a first antenna array 145, a second antenna array 150, an analog-to-digital converter (ADC) 170, and storage 180. The MCPU 110 comprises one or more MCPU cores, general purpose processing cores, array or vector processing cores, parallel processing cores, graphic processing units, neural net and linear algebra accelerators, field-programable gate arrays, digital signal processors, application-specific integrated circuits, and the like, or any combination thereof. The term "MCPU" in the singular is used herein to refer to either a single or multiple of the MCPU cores, general purpose processing cores, array or vector processing cores, parallel processing cores, graphic processing units, digital signal processors, neural net and linear algebra accelerators, application-specific integrated circuits, field-programable gate arrays, and the like, or any combination thereof comprised in the MCPU 110.

MCPU 110 includes a radar controller 115 and a signal processor 175. The radar controller 115 can receive data from the radar sensor circuit 130 and control radar parameters of the radar sensor circuit 130 such as frequency band, length of a radar frame, and the like via the DAC 120. A control signal from DAC 120 can be used to adjust the radar chirp signals output from a chirp generator 135 included in radar sensor circuit 130. The signal processor 175 in MCPU 110 can also receive the data from the radar sensor circuit 130 and perform signal processing for determining a distance or range between a target object and radar system 100, a radial velocity of the target object, an angle of arrival for the target object, and the like. The signal processor 175 can provide the calculated values to the storage 180 and/or to other systems via the interface 190.

The interface 190 can enable the MCPU 110 to communicate with other systems over local and wide area networks, the internet, automotive communication buses, and/or other kinds of wired or wireless communication systems, for example. The MCPU 110 can provide the calculated values over the interface 190 to other systems, such as a radar-camera-lidar fusion system; an automated driving assistance system including parking, braking, or lane-change assistance features; and the like. The storage 180 can be used to store instructions for the MCPU 110, received data from the radar sensor circuit 130, calculated values from the signal processor 175, and the like. Storage 180 can be any appropriate storage medium, such as a volatile or non-volatile memory.

The radar sensor circuit 130 includes the chirp generator 135, a transmitter 140, a receiver 155, and a baseband processor 160. The chirp generator 135 can include a local oscillator, for example, and generates radar chirp signals and provides them to the transmitter 140. For example, the chirp generator 135 frequency can modulate a continuous wave signal to form a series of linear chirp signals. The transmitted chirp signal of a known, stable frequency continuous wave varies up and down in frequency over a fixed period of time by the modulated signal. The chirp generator 135 provides the generated chirp signals to the transmitter 140, which drives the first antenna array 145 of one or more transmitter (TX) antennas. The second antenna array 150 comprises one or more receiver (RX) antennas and receives signals reflected from objects in the path of the transmitted chirp signals from the TX antenna array 145. The TX antenna array 145 and the RX antenna array 150 can be stationary or configured to transmit and receive across a range of area, such as by mechanical movement.

The receiver 155 receives the reflected signals from the RX antenna array 150 and provides them to the baseband processor 160. The baseband processor 160 also receives the transmitted chirp signals from the chirp generator 135 and downconverts the received chirp signals directly into the baseband using the copy of the transmitted chirp signals from the chirp generator 135. The baseband processor 160 can then filter and amplify the baseband signal. The baseband processor 160 provides the filtered and amplified baseband signal to the ADC 170, which digitizes the signal and provides it to the MCPU 110. The signal processor 175 in the MCPU 110 can then perform time domain to frequency domain transforms such as fast Fourier transforms (FFTs) and other signal processing to determine the distance, radial velocity, and angle of arrival between the target object and the radar system 100.

Frequency differences between the received reflections and the transmitted chirp signal increase with delay and so are proportional to distance. The phase differences between the received reflections across consecutive chirps in a radar frame are indicative of the velocity of objects in the field of view. For implementations in which RX antenna array 150 includes two or more receiver antennas, the phase difference between received reflections at a first RX antenna and received reflections at a second RX antenna can be used to determine the angle of arrival of target objects. For example, the down-converted and digitized receive signal corresponding to each chirp is first transformed using an FFT (called the range FFT). The range FFT produces a series of range bins with the value of each range bin denoting the signal strength of reflected targets at the corresponding range. A further "Doppler" FFT is then performed for each range bin across all the chirps in a frame to estimate the velocities of reflected targets. Additional processing can then be performed to determine the angle of arrival between the targets and the radar system 100. Although the radar system 100 is described herein as implementing FFT-based range-Doppler processing, any appropriate transforms may be used to produce the range-Doppler information.

For an implementation in which the radar system 100 is included in a vehicle with an automated driving assistance system, the automated driving assistance system can use the determined distance, velocity, and angle of arrival for objects in the field of view from the radar system 100 to provide parking, braking, or lane-change assistance. The radar system 100 must determine the direction of arrival with sufficient accuracy and speed to provide the automated driving assistance system with meaningful information such that meaningful driving assistance can be provided. Some existing methods for determining the direction of arrival are computationally expensive.

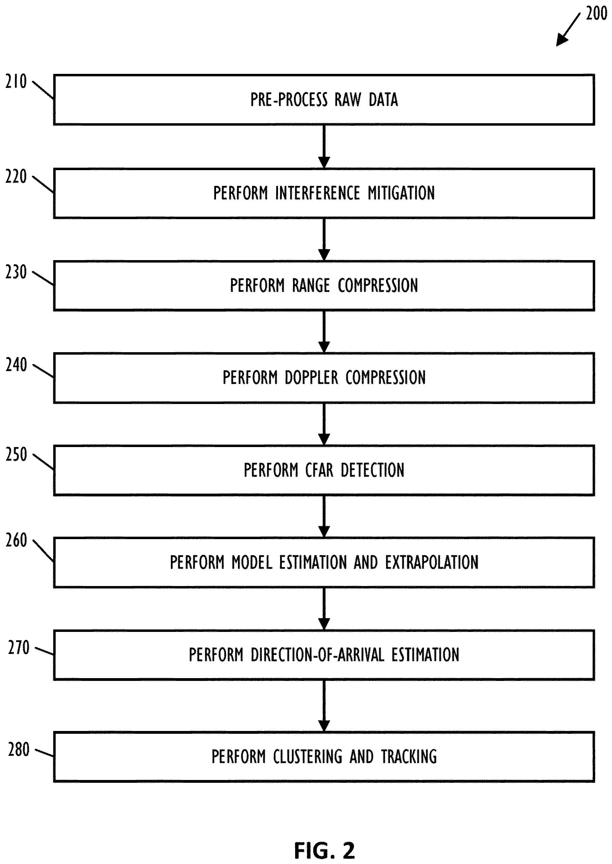

FIG. 2 shows, in flow chart form, an example process 200 for analyzing received radar data, according to one embodiment. For ease of illustration, the process 200 is described herein with reference to the radar system shown in FIG. 1. The process 200 is described herein as being performed by the signal processor 175 in the MCPU 110 executing instructions stored in storage 180 of the radar system 100, but can be performed by any appropriate processing unit executing instructions stored in any appropriate non-transitory computer-readable medium. The steps of process 200 are shown in a particular order in FIG. 2, but the steps of process 200 may be performed in a different order and/or some steps may be performed simultaneously. One or more steps of process 200 can be optional, and process 200 can include additional steps.

The process 200 begins at step 210, at which the signal processor 175 preprocesses the received radar data, for example by amplifying the received radar signal, mixing the received radar signal with the transmitted radar signal, and the like. At step 220, the signal processor 175 performs interference mitigation to reduce the impact of interfering radar signals in the pre-processed radar data. For example, the signal processor 175 can filter the pre-processed radar data at a known frequency of an interfering signal. At step 230, the signal processor 175 performs range compression. That is, the signal processor 175 performs a first FFT to obtain a rangeantenna data array. At step 240, the signal processor 175 performs doppler compression. That is, the signal processor 175 performs a second FFT to obtain a range-doppler-antenna data cube that indicates a signal strength for the received radar data at each range bin and velocity bin.

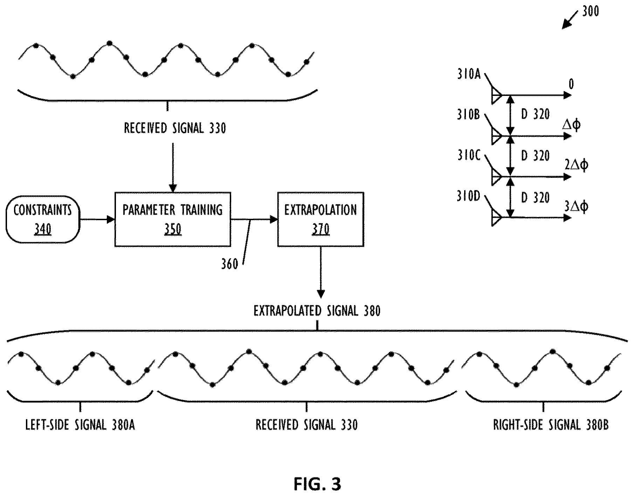

At step 250, the signal processor 175 performs constant false alarm rate (CFAR) detection to further reduce the impact of noise and clutter. At step 260, the signal processor 175 performs model estimation and signal extrapolation. For example, the signal processor 175 can use the Burg method to determine coefficients for an auto-regressive model that the signal processor 175 then uses to extrapolate the radar signal. Model estimation and signal extrapolation are described further herein with respect to FIGS. 3 and 5-7. At step 270, the signal processor 175 estimates target directions of arrival for objects based on the extrapolated radar signal. At step 280, the signal processor 175 performs object clustering and tracking.

FIG. 3 shows a diagram 300 of received and extrapolated signals and a process for generating the extrapolated signal, according to one embodiment. The diagram 300 shows a set of antennas 310A-D separated by a distance D 320, such that the received signal samples from each of the antennas 310A-D have a phase offset relative to each other. For example, the received signal sample 330A from the antenna 310A has a phase offset of zero, the received signal sample 330B from the antenna 310B has a phase offset of $\Delta\phi$, the received signal sample 330C from the antenna 310C has a phase offset of two times $\Delta\phi$, and the received signal sample 330D from the antenna 310D has a phase offset of three times $\Delta\phi$. In diagram 300, the antennas 310A-D are shown as real antennas, but in other implementations, the antennas 310A-D can be virtual antennas resulting from a multiple-input, multipleoutput (MIMO) radar system.

The resulting received signal x(n) 330 is used in tandem with predetermined constraints 340 to perform parameter training 350. The received signal x(n) 330 includes a number N of signal samples, such that the index n ranges from one to N. In this example, N equals sixteen. The parameter training 350 estimates coefficients $a_k$ 360 used to perform signal extrapolation 370. The coefficients $a_k$ 360 represent poles of an auto-regressive model, which can be represented as:

$$H(z) = \frac{b[0]}{A_p(z)} = \frac{b[0]}{1 + \sum_{k=1}^{p} a_k(k) z^{-k}} = \frac{b[0]}{\prod_{k=1}^{K}(1 - e^{j\omega_k}z^{-1})} \quad (1)$$

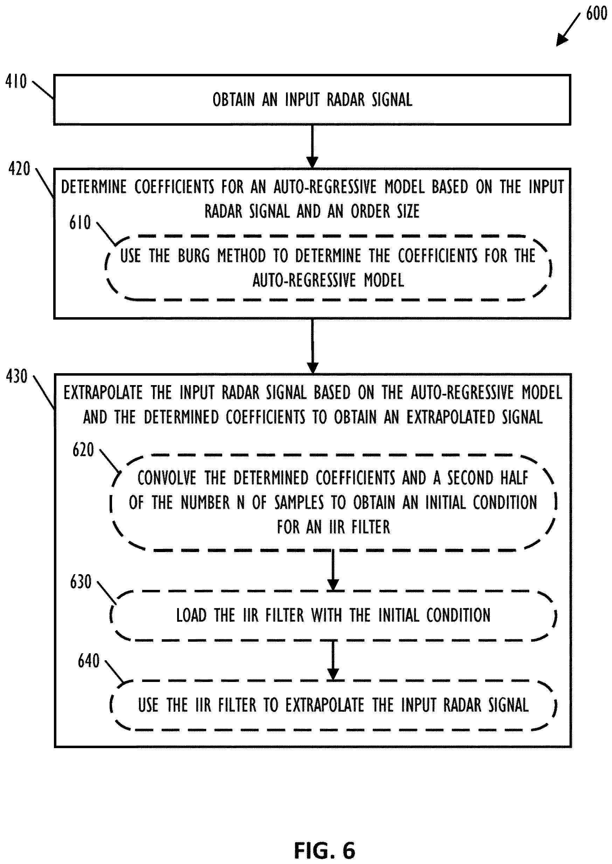

where b[0] is a scaling factor which is set to 1 for reconstruction/extrapolation purposes, $A_p(z)$ is a polynomial whose coefficients are the AR prediction coefficients, p is the number of poles, $\omega_k$ is a vector containing the angular frequencies that model the signal, K is the order size, and k is an index ranging from one to the order size K. The scaling factor b[0], the polynomial $A_p(z)$, the number of poles p, the vector $\omega_k$, and the order size **K** can be included in the constraints 340. For example, the Burg method can be used to estimate the coefficients 360, as described further herein with respect to FIG. 6. The extrapolation filter order of **K** can be chosen to balance redundancy, overfitting, and underfitting of the extrapolated signal based on the requirements of the particular implementation. In some implementations, the order **K** can be equal to approximately half of the number **N** of signal samples.

In some implementations, all **N** signal samples of the received signal x(n) 330 is used during parameter training 350. In contrast, signal extrapolation 370 can be performed using approximately half the number **N** signal samples of the received signal x(n) 330 at a time. That is, for the example shown in diagram 300 in which **N**=16, all 16 samples can be used during parameter training 350, and signal extrapolation 370 can be performed using a filter order **K** of eight, half of the 16 signal samples of the received signal x(n) 330. In some implementations, the signal extrapolation 370 can be used to generate a left-side signal 380A and a right-side signal 380B, such that the extrapolated signal 380 includes the left-side signal 380A indexed from -$N_x$ plus one to zero, the received signal x(n) 330 indexed from one to **N**, and the right-side signal 380B indexed from **N** plus one to **N** plus $N_x$, where $N_x$ represents the number of extrapolated signal samples on each side.

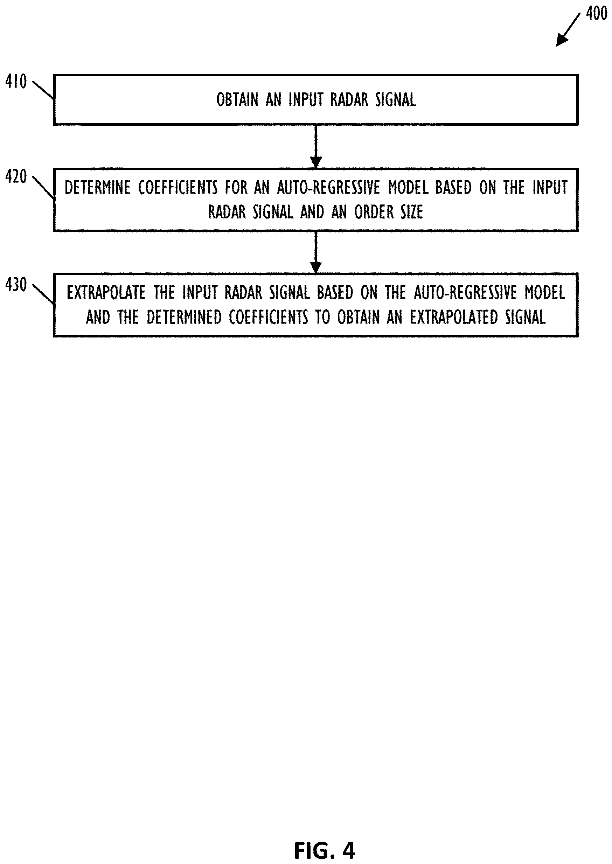

FIG. 4 shows, in flow chart form, an example process for extrapolating a signal, according to one embodiment. For ease of illustration, the process 400 is described herein with reference to the radar system shown in FIG. 1 and the diagram 300 shown in FIG. 3. The process 400 is described herein as being performed by the signal processor 175 in the MCPU 110 executing instructions stored in storage 180 of the radar system 100, but can be performed by any appropriate processing unit executing instructions stored in any appropriate non-transitory computer-readable medium. The steps of process 400 are shown in a particular order in FIG. 4, but the steps of process 400 may be performed in a different order and/or some steps may be performed simultaneously. One or more steps of process 400 can be optional, and process 400 can include additional steps.

The process 400 begins at step 410, at which signal processor 175 obtains an input radar signal, such as the received signal x(n) 330. At step 420, the signal processor 175 determines coefficients for an auto-regressive model based on the input radar signal and an order size **K**. For example, the coefficients $a_k$ 360 are determined using the Burg method based on the input radar signal 330 and equation 1 as shown above. At step 430, the signal processor 175 extrapolates the input radar signal based on the auto-regressive model and the determined coefficients to obtain an extrapolated signal. For example, the signal processor 175 extrapolates the input radar signal 330 based on the determined coefficients $a_k$ 360 to obtain the extrapolated signal 380.

In some implementations, the number of signal samples to be extrapolated at step 430 can be chosen based on the number **N** of signal samples. After a certain number of extrapolated signal samples, the improvement in angular resolution has diminishing returns against the number of additional calculations required to extrapolate the additional extrapolated signal samples. In some implementations, the number $N_x$ of extrapolated signal samples on each side can be chosen such that the total number $N_{total}$ of signal samples of the extrapolated signal 380 is represented as:

$$N_{total} = 4N \left[log_8(N)\right]_2 \quad (2)$$

where the operator $[x]_2$ represents the smallest number that is a power of two and larger than x. For example, if x equals 156, $[x]_2$ is equal to 256. The number $N_x$ of extrapolated signal samples on each side is represented as:

$$N_x = \frac{(N_{total} - N)}{2} \quad (3)$$

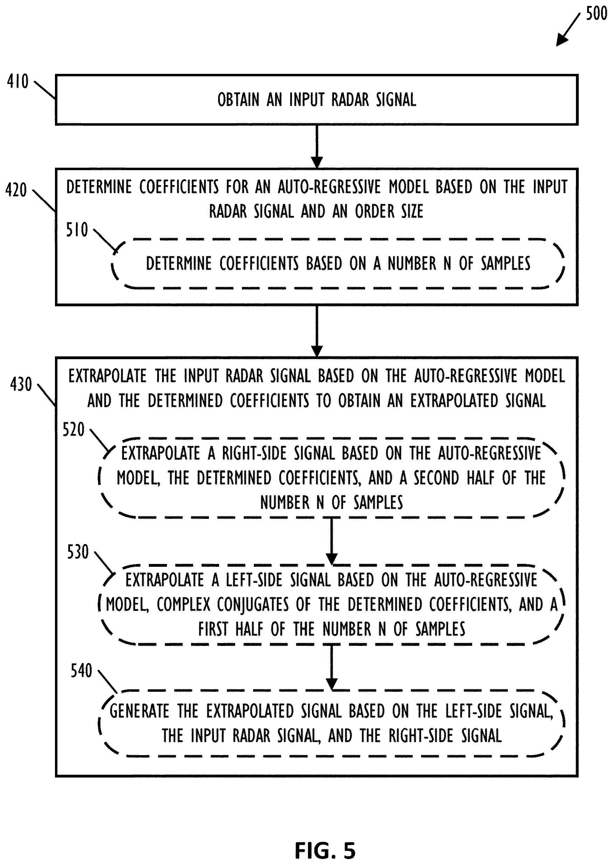

FIG. 5 shows, in flow chart form, another example process for extrapolating a signal, according to one embodiment. For ease of illustration, the process 500 is described herein with reference to the radar system shown in FIG. 1, the diagram 300 shown in FIG. 3, and the process 400 shown in FIG. 4. The process 500 is described herein as being performed by the signal processor 175 in the MCPU 110 executing instructions stored in storage 180 of the radar system 100, but can be performed by any appropriate processing unit executing instructions stored in any appropriate non-transitory computer-readable medium. The steps of process 500 are shown in a particular order in FIG. 5, but the steps of process 500 may be performed in a different order and/or some steps may be performed simultaneously. One or more steps of process 500 can be optional, and process 500 can include additional steps.

The process 500 begins at step 410, at which signal processor 175 obtains an input radar signal, such as the received signal x(n) 330. At step 420, the signal processor 175 determines coefficients for an auto-regressive model based on the input radar signal and an order size **K.** In some implementations, step 420 includes optional step 510, at which the signal processor 175 determines the coefficients based on a number **N** of signal samples. For example with respect to diagram 300 shown in FIG. 3, the signal processor 175 can determine the coefficients $a_k$ 360 based on the 16 signal samples of the received signal x(n) 330.

At step 430, the signal processor 175 extrapolates the input radar signal based on the auto-regressive model and the determined coefficients to obtain an extrapolated signal. In some implementations, step 430 includes optional steps 520, 530, and 540. At optional step 520, the signal processor 175 extrapolates a right-side signal based on the auto-regressive model, the coefficients determined at step 420, and a second half of the number **N** of signal samples. For example, the signal processor 175 extrapolates a right-side signal 380B based on the coefficients $a_k$ 360 and the signal samples x(9: 16) 330.

At optional step 530, the signal processor 175 extrapolates a left-side signal based on the auto-regressive model, complex conjugates of the coefficients determined at step 420, and a first half of the number **N** of signal samples.

For example, the signal processor 175 extrapolates a left-side signal 380A based on complex conjugates $a_k^*$ of the coefficients $a_k$ 360 and the signal samples x(1: 8). To extrapolate the left-side signal 380A using an anti-causal extrapolation, the sequence of the first half of the number **N** of signal samples is reversed, such that the signal becomes causal. After generating the left-side signal samples, the sequence of the left-side signal samples is reversed. At optional step 540, the signal processor 175 generates the extrapolated signal based on the left-side signal extrapolated at optional step 530, the input radar signal, and the right-side signal extrapolated at optional step 520. For example as shown in diagram 300, the extrapolated signal 380 includes a left-side signal 380A, the received signal x(n) 330, and the right-side signal 380B.

FIG. 6 shows, in flow chart form, a further example process 600 for extrapolating a signal, according to one embodiment. For ease of illustration, the process 600 is described herein with reference to the radar system shown in FIG. 1, the diagram 300 shown in FIG. 3, and the process 400 shown in FIG. 4. The process 600 is described herein as being performed by the signal processor 175 in the MCPU 110 executing instructions stored in storage 180 of the radar system 100, but can be performed by any appropriate processing unit executing instructions stored in any appropriate non-transitory computer-readable medium. The steps of process 600 are shown in a particular order in FIG. 6, but the steps of process 600 may be performed in a different order and/or some steps may be performed simultaneously. One or more steps of process 600 can be optional, and process 600 can include additional steps.

The process 600 begins at step 410, at which signal processor 175 obtains an input radar signal, such as the received signal x(n) 330. At step 420, the signal processor 175 determines coefficients for an auto-regressive model based on the input radar signal and an order size **K.** In some implementations, step 420 includes optional step 610, at which the signal processor 175 determines the coefficients using the Burg method. In some implementations, the optional step 610 can be performed in tandem with the optional step 510 described herein with respect to process 500 shown in FIG. 5. That is, the signal processor 175 determines the coefficients based on a number **N** of samples and using the Burg method.

Burg's algorithm is frequently used for minimizing both forward and backward prediction errors and can be viewed as a constrained least-squares minimization. An assumption of the Burg's algorithm is that the process is wide-sense stationary, such that coefficients of the backward prediction error are identical to the coefficients of the forward prediction error, but conjugated and reversed in time. As a result, the forward linear prediction error $f_e(n)$ can be represented as:

$$f_e(n) = x_n - \widehat{x}_n = \sum_{k=0}^{p} a_{pk} x_{n-k} \quad (4)$$

where $f_e(n)$ is defined for $p \le n \le N\text{ - }1$, $a_{p0}$ is one, $a_{pk}$ represents the auto-regressive coefficients at a particular order p, and $x_n$ are the data samples.

The backward linear prediction error $b_e(n)$ can be represented as:

$$b_e(n) = x_n - \widehat{x}_n = \sum_{k=0}^{p} a_{pk}^* x_{n-p-k} \quad (5)$$

where $b_e(n)$ is defined for $p \le n \le N\text{ - }1$, and $a_{pk}^*$ represents the complex conjugates of the auto-regressive coefficients $a_{pk}$. To estimate the coefficients, each $a_{pk}$ coefficient must satisfy a Levinson recursion, such that:

$$a_{k+1}(i) = a_k(i) + \mu a_k^*(k - i + 1) \quad (6)$$

where $i = [1, k]$ and $\mu$ is the constrained coefficient used to ensure the filter is stable and all the poles are positioned within the unit circle.

The Burg algorithm computes the constrained coefficient $\mu$ by minimizing the total sum of the forward linear prediction error $f_e(n)$ and the backward linear prediction error $b_e(n)$. The constrained coefficient $\mu$ can be updated for each value of k based on a forward linear prediction $f(n)$ and a backward linear prediction $b(n)$, both of which are written based on the Levinson recursion. The forward linear prediction $f(n)$ can be represented as:

$$f(n) = \hat{x}_n = - \sum_{k=1}^{p} a_{pk} x_{n-k} \quad (7)$$

and the backward linear prediction $b(n)$ can be represented as:

$$b(n) = \hat{x}_n = - \sum_{k=1}^{p} a_{pk} x_{n+k} \quad (8)$$

The Burg algorithm has a computation complexity of $3Np - p^2 - N + 3p$ complex multiplications, $3Np - p^2 - 2N - p$ complex additions, and $p$ real divisions, and uses storage of $3N + p + 2$ complex values.

At step 430, the signal processor 175 extrapolates the input radar signal based on the auto-regressive model and the determined coefficients to obtain an extrapolated signal. In some implementations, step 430 includes optional steps 620, 630, and 640. At optional step 620, the signal processor 175 convolves the coefficients determined at step 420 and a second half of the number N of signal samples to obtain an initial condition for an infinite impulse response (IIR) filter. For example, the signal processor 175 convolves the coefficients $a_k$ 360 and the signal samples x(9: 16) 330 to obtain the initial condition. At optional step 630, the signal processor 175 loads an IIR filter with the initial condition determined at optional step 620. At optional step 640, the IIR filter is used to extrapolate the input radar signal. That is, the IIR filter is used to extrapolate the input radar signal x(n) 330 and obtain the extrapolated signal 380.

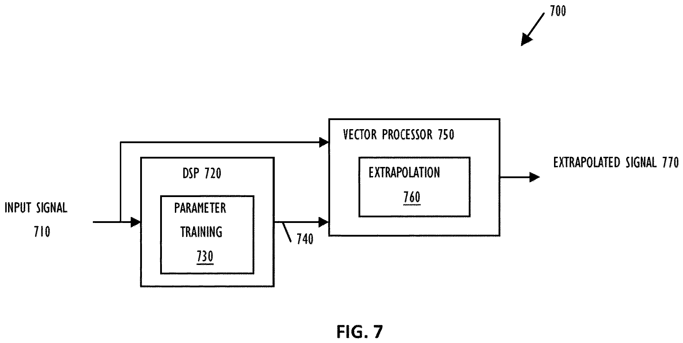

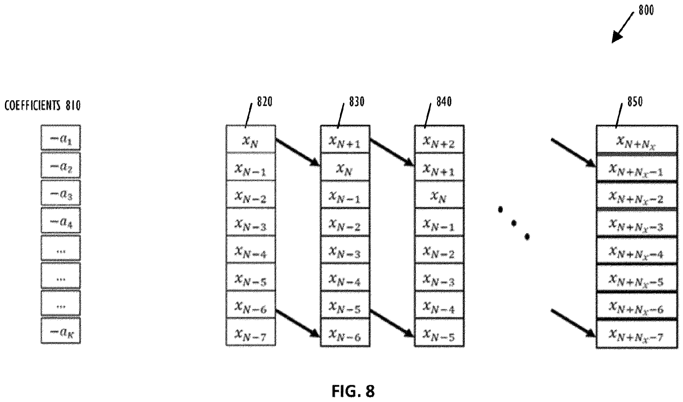

FIG. 7 shows, in block diagram form, an example processing system 700 for extrapolating a signal, according to one embodiment. The example processing system 700 includes a digital signal processor (DSP) 720 and a vector processor 750. The input radar signal 710 is provided to both the DSP 720 and the vector processor 750. The DSP 720 performs parameter training 730 based on the input signal 710 and outputs coefficients 740 to the vector processor 750, which performs extrapolation 760 based on the input signal 710 and the coefficients 740 from the DSP 720. The vector processor 750 outputs the extrapolated signal 770 to a signal processor, such as signal processor 175 in MCPU 110 shown in FIG. 1, which performs direction of arrival estimation based on the extrapolated signal 770. For example, the signal processor 175 performs direction of arrival estimation 270 from process 200 based on the extrapolated signal 770. The vectorized implementation of the signal extrapolation 760 is described further herein with respect to FIG. 8.

FIG. 8 shows a diagram 800 of a vectorized extrapolation process for the right-side signal 380B, according to one embodiment. For ease of explanation, the diagram 800 is described herein with reference to diagram 300 shown in FIG. 3 and the example processing system 700 shown in FIG. 7. For notation simplicity, $x_n$ represents the extrapolated signal 770 output from the vector processor. Each extrapolated signal sample $x_{N+i}$ of the extrapolated signal $x_n$ is computed by a dot product between the prior $K$ samples of the input radar signal and the coefficients $a_k$ 810 and is represented as:

$$x_{N+i} = \sum_{j=1}^{K} a_j \, x_{N-j+i} \quad (9)$$

for i equal to one through the number $N_x$ of extrapolated signal samples on each side. The dot product between the signal $x$ and the coefficients $a_k$ is calculated as $x_1$ times $a_1$, plus $x_2$ times $a_2$, plus $x_3$ times $a_3$, and so on. In some implementations, the number of memory slices is an integer multiple of the order $K$ and chosen to facilitate memory alignment, as described further herein. For example, the order $K$ is equal to eight, and eight memory slices are used.

At an initial time, the memory slice 820 stores the signal samples of the input radar signal used to extrapolate the right-side signal 380B. For example as discussed previously herein with respect to optional step 520 of process 500 shown in FIG. 5, the memory slice 820 stores eight signal samples $x_{N-7}$ through $x_N$; that is, the memory slice 820 stores the second half of the number $N$ signal samples x(9: 16) 330. The first extrapolated signal sample $x_{N+1}$ is calculated using the appropriate coefficients 810 and the signal samples $x_{N-7}$ through $x_N$ stored in memory slice 820. The first extrapolated signal sample $x_{N+1}$ is then stored, resulting in an updated memory slice 830 that includes the first extrapolated signal sample $x_{N+1}$ and the signal samples $x_{N-6}$ through $x_N$.

The second extrapolated signal sample $x_{N+2}$ is calculated using the appropriate coefficients 810 and the signal samples $x_{N+1}$ and $x_{N-6}$ through $x_N$ stored in memory slice 830. The second extrapolated signal sample $x_{N+2}$ is then stored, resulting in an updated memory slice 840 that includes the first and second extrapolated signal samples $x_{N+1}$ and $x_{N+2}$ and the signal samples $x_{N-5}$ through $x_N$. The remaining extrapolated signal samples are calculated and the memory slice is updated until all the extrapolated signal samples $x_{N+Nx-7}$ through $x_{N+Nx}$ are stored in the memory slice 850.

The diagram 800 describes the process for generating the right-side signal 380B. To generate the left-side signal 380A, the sequence of the input radar signal samples $x(n)$ 330 are reversed, such that $x(n) - x(-n)$. The complex conjugates $a_k^*$ of the coefficients $a_k$ 810 are used, and at an initial time, the memory slice 820 stores the signal samples of the input radar signal used to extrapolate the left-side signal 380A. For example as discussed previously herein with respect to optional step 530 of process 500 shown in FIG. 5, the memory slice 820 stores the first half of the number N signal samples x(1: 8) 330. Although the example memory slices shown in FIG. 8 includes a single column with eight rows, the memory slices for the coefficients $a_k$ 810 and the signal $x_n$ can be any appropriate number of rows and columns such that the dot product between the coefficients $a_k$ 810 and the signal $x_n$ implements vectorized IIR filtering. The memory slice for the coefficients $a_k$ and the signal $x_n$ are the same size. For example, twelve coefficients can be put into a memory slice with two columns and eight rows, with appropriate zero padding in the remaining four cells.

As described herein, the disclosed techniques for extrapolating an input radar signal provide additional signal samples for determining the angle of arrival, increasing the angular resolution of the radar system. The disclosed techniques for extrapolating the input radar signal leverage forward-backward extrapolation and parameter reuse, reducing the number of calculations necessary compared to techniques that require parameters to be recalculated. In addition, the disclosed techniques determine a number of extrapolated signal samples to balance the computational cost of additional extrapolated signal samples and the corresponding increase in angular resolution. The disclosed techniques can also be implemented on a vector processor, further increasing the efficiency of the signal extrapolation.

Features specifically shown or described with respect to one embodiment set forth herein may be implemented in other embodiments set forth herein.

In this description, the term "couple" may cover connections, communications, or signal paths that enable a functional relationship consistent with this description, including intermediate or intervening components that do not alter the functional relationship. A device that is "configured to" perform a task or function may be configured by programming or hardwiring, for example, at a time of manufacturing by a manufacturer and/or may be configurable or reconfigurable by a user after manufacturing. The configuring may be done through firmware and/or software, construction and/or layout of hardware components and connections, or any combination thereof. As used herein, "node", "pin", and "lead" are used interchangeably. A circuit or device described herein as including certain components may be adapted to be coupled to those components instead, to form the described circuitry or device.

While particular embodiments of the present invention have been shown and described, it will be recognized to those skilled in the art that, based upon the teachings herein, further changes and modifications may be made without departing from this invention and its broader aspects, and thus, the appended claims are to encompass within their scope all such changes and modifications as are within the scope of this invention.

A system includes a processor and a non-transitory computer-readable medium storing machine instructions executable by the processor. The processor obtains an input radar signal, determines coefficients for an auto-regressive model based on the input radar signal and an order size, and extrapolates the input radar signal based on the auto-regressive model and the determined coefficients to obtain an extrapolated signal. In some implementations, the input radar signal comprises a number **N** of samples, and the order size is approximately half of the number **N.** The coefficients are determined based on the number **N** of samples, and the processor extrapolates a right-side signal based on the auto-regressive model, the determined coefficients, and a second half of the number **N** of samples; extrapolates a left-side signal based on the auto-regressive model, complex conjugates of the determined coefficients, and a first half of the number **N** of samples; and generates the extrapolated signal based on the left-side signal, the input radar signal, and the right-side signal.

In some implementations, the machine instructions to extrapolate the input radar signal based on the auto-regressive model and the determined coefficients include machine instructions to convolve the determined coefficients and a second half of the number **N** of samples to obtain an initial condition for an IIR filter, load the IIR filter with the initial condition, and use the IIR filter to extrapolate the input radar signal. In some implementations, the machine instructions to determine coefficients for the auto-regressive model include machine instructions to use the Burg method to determine coefficients for the auto-regressive model.

In some implementations, the at least one processor includes a digital signal processor and a vector processor. The digital signal processor is configured to execute the machine instructions to determine coefficients for the auto-regressive model, and the vector processor is configured to execute the machine instructions to extrapolate the input radar signal based on the auto-regressive model and the determined coefficients. In some implementations, the input radar signal includes a number **N** of samples, and a number **M** of extrapolated samples is represented as:

$$M = \frac{4N\,[log_8(N)]_2 - N}{2}$$

where the operator $[x]_2$ represents the smallest number that is a power of two and larger than x. The machine instructions to extrapolate the input radar signal based on the auto-regressive model and the determined coefficients include machine instructions to determine the number **M** of extrapolated samples. Each extrapolated sample $x_n$ is represented as:

$$x_n = -x_{n-K:n-1} \cdot a_{1:K}$$

where **K** is half of the number **N** of samples, $a_{1:K}$ represents the determined coefficients, and "." indicates a dot product.

A non-transitory computer-readable medium stores machine instructions which, when executed by at least one processor, cause the at least one processor to obtain an input radar signal, determine coefficients for an auto-regressive model based on the input radar signal and an order size, and extrapolate the input radar signal based on the auto-regressive model and the determined coefficients to obtain an extrapolated signal. In some implementations, the input radar signal comprises a number **N** of samples, and the order size is approximately half of the number **N**. The coefficients are determined based on the number **N** of samples, and the machine instructions cause the at least one processor to extrapolate a right-side signal based on the auto-regressive model, the determined coefficients, and a second half of the number **N** of samples; extrapolate a left-side signal based on the auto-regressive model, complex conjugates of the determined coefficients, and a first half of the number **N** of samples; and generate the extrapolated signal based on the left-side signal, the input radar signal, and the right-side signal.

In some implementations, the machine instructions to extrapolate the input radar signal based on the auto-regressive model and the determined coefficients include machine instructions to convolve the determined coefficients and a second half of the number **N** of samples to obtain an initial condition for an IIR filter, load the IIR filter with the initial condition, and use the IIR filter to extrapolate the input radar signal. In some implementations, the machine instructions to determine coefficients for the auto-regressive model include machine instructions to use the Burg method to determine coefficients for the auto-regressive model.

In some implementations, the at least one processor includes a digital signal processor and a vector processor. The digital signal processor is configured to execute the machine instructions to determine coefficients for the auto-regressive model, and the vector processor is configured to execute the machine instructions to extrapolate the input radar signal based on the auto-regressive model and the determined coefficients. In some implementations, the input radar signal includes a number **N** of samples, and a number **M** of extrapolated samples is represented as:

$$M = \frac{4N\,[log_8(N)]_2 - N}{2}$$

where the operator $[x]_2$ represents the smallest number that is a power of two and larger than x. The machine instructions to extrapolate the input radar signal based on the auto-regressive model and the determined coefficients include machine instructions to determine the number **M** of extrapolated samples. Each extrapolated sample $x_n$ is represented as:

$$x_n = -x_{n-K:n-1} \cdot a_{1:K}$$

where **K** is half of the number **N** of samples, $a_{1:K}$ represents the determined coefficients, and "." indicates a dot product.

A method includes obtaining an input radar signal, determining coefficients for an auto-regressive model based on the input radar signal and an order size, and extrapolating the input radar signal based on the auto-regressive model and the determined coefficients to obtain an extrapolated signal. In some implementations, the input radar signal comprises a number **N** of samples, and the order size is approximately half of the number **N**. The coefficients are determined based on the number **N** of samples, and the method includes extrapolating a right-side signal based on the auto-regressive model, the determined coefficients, and a second half of the number **N** of samples; extrapolating a left-side signal based on the auto-regressive model, complex conjugates of the determined coefficients, and a first half of the number **N** of samples; and generating the extrapolated signal based on the left-side signal, the input radar signal, and the right-side signal.

In some implementations, extrapolating the input radar signal based on the auto-regressive model and the determined coefficients includes convolving the determined coefficients and a second half of the number **N** of samples to obtain an initial condition for an IIR filter, loading the IIR filter with the initial condition, and using the IIR filter to extrapolate the input radar signal. In some implementations, determining coefficients for the auto-regressive model includes using the Burg method to determine coefficients for the auto-regressive model. In some implementations, determining coefficients for the auto-regressive model includes determining, by a digital signal processor, the coefficients for the auto-regressive model. Extrapolating the input radar signal based on the auto-regressive model and the determined coefficients includes extrapolating, by a vector processor, the input radar signal based on the auto-regressive model and the determined coefficients.

In some implementations, the input radar signal includes a number **N** of samples, and a number **M** of extrapolated samples is represented as:

$$M = \frac{4N \left[log_8(N)\right]_2 - N}{2}$$

where the operator $\left[x\right]_2$ represents the smallest number that is a power of two and larger than x. Extrapolating the input radar signal based on the auto-regressive model and the determined coefficients includes determining the number **M** of extrapolated samples. Each extrapolated sample $x_n$ is represented as:

$$x_n = -x_{n-K:n-1} \cdot a_{1:K}$$

where **K** is half of the number **N** of samples, $a_{1:K}$ represents the determined coefficients, and "." indicates a dot product.

One or more embodiments of the present disclosure may include features recited in the following numbered clauses:

1. A system, comprising: at least one processor; and at least one non-transitory computer-readable medium storing machine instructions which, when executed by the at least one processor, cause the at least one processor to: obtain an input radar signal; determine coefficients for an auto-regressive model based on the input radar signal and an order size; and extrapolate the input radar signal based on the auto-regressive model and the determined coefficients to obtain an extrapolated signal.

2. The system of clause 1, wherein the input radar signal comprises a number **N** of samples and the order size is approximately half the number **N.**

3. The system of clause 2, wherein: the machine instructions to determine coefficients for the auto-regressive model comprise machine instructions to determine coefficients for the auto-regressive model based on the number **N** of samples; and the machine instructions to extrapolate the input radar signal comprise machine instructions to: extrapolate a right-side signal based on the auto-regressive model, the determined coefficients, and a second half of the number **N** of samples; extrapolate a left-side signal based on the auto-regressive model, complex conjugates of the determined coefficients, and a first half of the number **N** of samples; and generate the extrapolated signal based on the left-side signal, the radar input signal, and the right-side signal.

4. The system of clause 2, wherein the machine instructions to extrapolate the input radar signal based on the auto-regressive model and the determined coefficients comprise machine instructions to: convolve the determined coefficients and a second half of the number **N** of samples to obtain an initial condition for an infinite impulse response (IIR) filter; load the IIR filter with the initial condition; and use the IIR filter to extrapolate the input radar signal.

5. The system of clause 1, wherein the machine instructions to determine coefficients for the auto-regressive model comprise machine instructions to use the Burg method to determine coefficients for the auto-regressive model.

6. The system of clause 1, wherein the at least one processor comprises a digital signal processor and a vector processor, wherein the digital signal processor is configured to execute the machine instructions to determine coefficients for the auto-regressive model, and wherein the vector processor is configured to execute the machine instructions to extrapolate the input radar signal based on the auto-regressive model and the determined coefficients.

7. The system of clause 6, wherein the input radar signal comprises a number **N** of samples, wherein a number of **M** of extrapolated samples is represented as:

$$M = \frac{4N \left\lceil log_8(N) \right\rceil_2 - N}{2}$$

where the operator $\left\lceil x \right\rceil_2$ represents the smallest number that is a power of two and larger than x, wherein the machine instructions to extrapolate the input radar signal based on the auto-regressive model and the determined coefficients comprise machine instructions to determine the number **M** of extrapolated samples, wherein each extrapolated sample $x_n$ is represented as:

$$x_n = -x_{n-K:n-1} \cdot a_{1:K}$$

where **K** is half of the number **N** of samples, $a_{1:K}$ represents the determined coefficients, and "·" indicates a dot product.

8. A non-transitory computer-readable medium storing machine instructions which, when executed by at least one processor, cause the at least one processor to: obtain an input radar signal; determine coefficients for an auto-regressive model based on the input radar signal and an order size; and extrapolate the input radar signal based on the auto-regressive model and the determined coefficients to obtain an extrapolated signal.

9. The non-transitory computer-readable medium of clause 8, wherein the input radar signal comprises a number **N** of samples and the order size is approximately half the number **N.**

10. The non-transitory computer-readable medium of clause 9, wherein: the machine instructions to determine coefficients for the auto-regressive model comprise machine instructions to determine coefficients for the auto-regressive model based on the number **N** of samples; and the machine instructions to extrapolate the input radar signal comprise machine instructions to: extrapolate a right-side signal based on the auto-regressive model, the determined coefficients, and a second half of the number **N** of samples; extrapolate a left-side signal based on the auto-regressive model, complex conjugates of the determined coefficients, and a first half of the number **N** of samples; and generate the extrapolated signal based on the left-side signal, the radar input signal, and the right-side signal.

11. The non-transitory computer-readable medium of clause 9, wherein the machine instructions to extrapolate the input radar signal based on the auto-regressive model and the determined coefficients comprise machine instructions to: convolve the determined coefficients and a second half of the number **N** of samples to obtain an initial condition for an infinite impulse response (IIR) filter; load the IIR filter with the initial condition; and use the IIR filter to extrapolate the input radar signal.

12. The non-transitory computer-readable medium of clause 9, wherein the machine instructions to determine coefficients for the auto-regressive model comprise machine instructions to use the Burg method to determine coefficients for the auto-regressive model.

13. The non-transitory computer-readable medium of clause 8, wherein the machine instructions to determine coefficients for the auto-regressive model are configured to be executed by a digital signal processor, and wherein the machine instructions to extrapolate the input radar signal based on the auto-regressive model and the determined coefficients are configured to be executed by a vector processor.

14. The non-transitory computer-readable medium of clause 13, wherein the input radar signal comprises a number **N** of samples, wherein a number of **M** of extrapolated samples is represented as:

$$M = \frac{4N \left\lceil log_8(N) \right\rceil_2 - N}{2}$$

where the operator $\lceil x \rceil_2$ represents the smallest number that is a power of two and larger than x, wherein the machine instructions to extrapolate the input radar signal based on the auto-regressive model and the determined coefficients comprise machine instructions to determine the number **M** of extrapolated samples, wherein each extrapolated sample $x_n$ is represented as:

$$x_n = -x_{n-K:n-1} \cdot a_{1:K}$$

where **K** is half of the number **N** of samples and $a_{1:K}$ represents the determined coefficients.

15. A method, comprising: obtaining an input radar signal; determining coefficients for an auto-regressive model based on the input radar signal and an order size; and extrapolating the input radar signal based on the auto-regressive model and the determined coefficients to obtain an extrapolated signal.

16. The method of clause 15, wherein the input radar signal comprises a number **N** of samples and the order size is approximately half the number **N.**

17. The method of clause 16, wherein: determining coefficients for the auto-regressive model comprises determining coefficients for the auto-regressive model based on the number **N** of samples; and extrapolating the input radar signal comprises: extrapolating a right-side signal based on the auto-regressive model, the determined coefficients, and a second half of the number **N** of samples; extrapolating a left-side signal based on the auto-regressive model, complex conjugates of the determined coefficients, and a first half of the number **N** of samples; and generating the extrapolated signal based on the left-side signal, the radar input signal, and the right-side signal.

18. The method of clause 16, wherein extrapolating the input radar signal based on the auto-regressive model and the determined coefficients comprises: convolving the determined coefficients and a second half of the number **N** of samples to obtain an initial condition for an infinite impulse response (IIR) filter; loading the IIR filter with the initial condition; and using the IIR filter to extrapolate the input radar signal.

19. The method of clause 15, wherein determining coefficients for the auto-regressive model comprises using the Burg method to determine coefficients for the auto-regressive model.

20. The method of clause 15, wherein: determining coefficients for the auto-regressive model comprises determining, by a digital signal processor, the coefficients for the auto-regressive model; and extrapolating the input radar signal based on the auto-regressive model and the determined coefficients comprises extrapolating, by a vector processor, the input radar signal based on the auto-regressive model and the determined coefficients.

21. The method of clause 20, wherein the input radar signal comprises a number **N** of samples, wherein a number of M of extrapolated samples is represented as:

$$M = \frac{4N \left\lceil log_8(N) \right\rceil_2 - N}{2}$$

where the operator $\lceil x \rceil_2$ represents the smallest number that is a power of two and larger than x, wherein extrapolating the input radar signal based on the auto-regressive model and the determined coefficients comprises determining the number M of extrapolated samples, wherein each extrapolated sample $x_n$ is represented as:

$$x_n = -x_{n-K:n-1} \cdot a_{1:K}$$

where **K** is half of the number **N** of samples and $a_{1:K}$ represents the determined coefficients.

**Claims**

1. A system, comprising:

   at least one processor; and
   at least one non-transitory computer-readable medium storing machine instructions which, when executed by the at least one processor, cause the at least one processor to:

   obtain an input radar signal;
   determine coefficients for an auto-regressive model based on the input radar signal and an order size; and
   extrapolate the input radar signal based on the auto-regressive model and the determined coefficients to obtain an extrapolated signal.

2. The system of claim 1, wherein the input radar signal comprises a number **N** of samples and the order size is approximately half the number **N.**

3. The system of claim 1 or 2, wherein:

   the machine instructions to determine coefficients for the auto-regressive model comprise machine instructions to determine coefficients for the auto-regressive model based on the number **N** of samples; and
   the machine instructions to extrapolate the input radar signal comprise machine instructions to:

   extrapolate a right-side signal based on the auto-regressive model, the determined coefficients, and a second half of the number **N** of samples;
   extrapolate a left-side signal based on the auto-regressive model, complex conjugates of the determined coefficients, and a first half of the number **N** of samples; and
   generate the extrapolated signal based on the left-side signal, the radar input signal, and the right-side signal.

4. The system of any one of the preceding claims, wherein the machine instructions to extrapolate the input radar signal based on the auto-regressive model and the determined coefficients comprise machine instructions to:

   convolve the determined coefficients and a second half of the number **N** of samples to obtain an initial condition for an infinite impulse response (IIR) filter;
   load the IIR filter with the initial condition; and
   use the IIR filter to extrapolate the input radar signal.

5. The system of any one of the preceding claims, wherein the machine instructions to determine coefficients for the auto-regressive model comprise machine instructions to use the Burg method to determine coefficients for the auto-regressive model.

6. The system of any one of the preceding claims, wherein the at least one processor comprises a digital signal processor and a vector processor, wherein the digital signal processor is configured to execute the machine instructions to determine coefficients for the auto-regressive model, and wherein the vector processor is configured to execute the machine instructions to extrapolate the input radar signal based on the auto-regressive model and the determined coefficients.

7. The system of any one of the preceding claims, wherein the input radar signal comprises a number **N** of samples, wherein a number of **M** of extrapolated samples is represented as:

$$M = \frac{4N \left\lceil log_8(N) \right\rceil_2 - N}{2}$$

where the operator $\left\lceil x \right\rceil_2$ represents the smallest number that is a power of two and larger than x, wherein the machine instructions to extrapolate the input radar signal based on the auto-regressive model and the determined coefficients comprise machine instructions to determine the number **M** of extrapolated samples, wherein each extrapolated sample $x_n$ is represented as:

$$x_n = -x_{n-K:n-1} \cdot a_{1:K}$$

where **K** is half of the number **N** of samples, $a_{1:K}$ represents the determined coefficients, and "·" indicates a dot product.

8. A non-transitory computer-readable medium storing machine instructions which, when executed by at least one processor, cause the at least one processor to:

   obtain an input radar signal;
   determine coefficients for an auto-regressive model based on the input radar signal and an order size; and
   extrapolate the input radar signal based on the auto-regressive model and the determined coefficients to obtain an extrapolated signal.

9. A method, comprising:

   obtaining an input radar signal;
   determining coefficients for an auto-regressive model based on the input radar signal and an order size; and
   extrapolating the input radar signal based on the auto-regressive model and the determined coefficients to obtain an extrapolated signal.

10. The method of claim 9, wherein the input radar signal comprises a number **N** of samples and the order size is approximately half the number **N.**

11. The method of any one of the preceding claims 9 to 10, wherein:

    determining coefficients for the auto-regressive model comprises determining coefficients for the auto-regressive model based on the number **N** of samples; and
    extrapolating the input radar signal comprises:

       extrapolating a right-side signal based on the auto-regressive model, the determined coefficients, and a second half of the number **N** of samples;
       extrapolating a left-side signal based on the auto-regressive model, complex conjugates of the determined coefficients, and a first half of the number **N** of samples; and
       generating the extrapolated signal based on the left-side signal, the radar input signal, and the right-side signal.

12. The method of any one of the preceding claims 9 to 11, wherein extrapolating the input radar signal based on the auto-regressive model and the determined coefficients comprises:

    convolving the determined coefficients and a second half of the number **N** of samples to obtain an initial condition for an infinite impulse response (IIR) filter;
    loading the IIR filter with the initial condition; and
    using the IIR filter to extrapolate the input radar signal.

13. The method of any one of the preceding claims 9 to 12, wherein determining coefficients for the auto-regressive model comprises using the Burg method to determine coefficients for the auto-regressive model.

**14.** The method of any one of the preceding claims 9 to 13, wherein:

determining coefficients for the auto-regressive model comprises determining, by a digital signal processor, the coefficients for the auto-regressive model; and

extrapolating the input radar signal based on the auto-regressive model and the determined coefficients comprises extrapolating, by a vector processor, the input radar signal based on the auto-regressive model and the determined coefficients.

**15.** The method of any one of the preceding claims 9 to 14, wherein the input radar signal comprises a number **N** of samples, wherein a number of **M** of extrapolated samples is represented as:

$$M = \frac{4N \left\lceil log_8(N) \right\rceil_2 - N}{2}$$

where the operator $\left\lceil x \right\rceil_2$ represents the smallest number that is a power of two and larger than x, wherein extrapolating the input radar signal based on the auto-regressive model and the determined coefficients comprises determining the number **M** of extrapolated samples, wherein each extrapolated sample $x_n$ is represented as:

$$x_n = -x_{n-K:n-1} \cdot a_{1:K}$$

where **K** is half of the number **N** of samples and $a_{1:K}$ represents the determined coefficients.

100

145

RADAR SENSOR CIRCUIT
130

| | TRANSMITTER 140 | CHIRP GENERATOR 135 | DAC 120 | MCPU 110 |

RADAR CONTROLLER 115

INTERFACE 190

RECEIVER 155

BASEBAND PROCESSOR 160

ADC 170

SIGNAL PROCESSOR 175

150

STORAGE 180

FIG. 1

200

| 210 | PRE-PROCESS RAW DATA |
| 220 | PERFORM INTERFERENCE MITIGATION |
| 230 | PERFORM RANGE COMPRESSION |
| 240 | PERFORM DOPPLER COMPRESSION |
| 250 | PERFORM CFAR DETECTION |
| 260 | PERFORM MODEL ESTIMATION AND EXTRAPOLATION |
| 270 | PERFORM DIRECTION-OF-ARRIVAL ESTIMATION |
| 280 | PERFORM CLUSTERING AND TRACKING |

**FIG. 2**

RECEIVED SIGNAL 330

CONSTRAINTS 340

PARAMETER TRAINING 350

EXTRAPOLATION 370

360

310A 0

310B D 320 $\Delta\phi$

310C D 320 $2\Delta\phi$

310D D 320 $3\Delta\phi$

300

EXTRAPOLATED SIGNAL 380

LEFT-SIDE SIGNAL 380A

RECEIVED SIGNAL 330

RIGHT-SIDE SIGNAL 380B

**FIG. 3**

400

410 — OBTAIN AN INPUT RADAR SIGNAL

420 — DETERMINE COEFFICIENTS FOR AN AUTO-REGRESSIVE MODEL BASED ON THE INPUT RADAR SIGNAL AND AN ORDER SIZE

430 — EXTRAPOLATE THE INPUT RADAR SIGNAL BASED ON THE AUTO-REGRESSIVE MODEL AND THE DETERMINED COEFFICIENTS TO OBTAIN AN EXTRAPOLATED SIGNAL

**FIG. 4**

500

410 — OBTAIN AN INPUT RADAR SIGNAL

420 — DETERMINE COEFFICIENTS FOR AN AUTO-REGRESSIVE MODEL BASED ON THE INPUT RADAR SIGNAL AND AN ORDER SIZE

510 — DETERMINE COEFFICIENTS BASED ON A NUMBER N OF SAMPLES

430 — EXTRAPOLATE THE INPUT RADAR SIGNAL BASED ON THE AUTO-REGRESSIVE MODEL AND THE DETERMINED COEFFICIENTS TO OBTAIN AN EXTRAPOLATED SIGNAL

520 — EXTRAPOLATE A RIGHT-SIDE SIGNAL BASED ON THE AUTO-REGRESSIVE MODEL, THE DETERMINED COEFFICIENTS, AND A SECOND HALF OF THE NUMBER N OF SAMPLES

530 — EXTRAPOLATE A LEFT-SIDE SIGNAL BASED ON THE AUTO-REGRESSIVE MODEL, COMPLEX CONJUGATES OF THE DETERMINED COEFFICIENTS, AND A FIRST HALF OF THE NUMBER N OF SAMPLES

540 — GENERATE THE EXTRAPOLATED SIGNAL BASED ON THE LEFT-SIDE SIGNAL, THE INPUT RADAR SIGNAL, AND THE RIGHT-SIDE SIGNAL

**FIG. 5**

600

410 — OBTAIN AN INPUT RADAR SIGNAL

420 — DETERMINE COEFFICIENTS FOR AN AUTO-REGRESSIVE MODEL BASED ON THE INPUT RADAR SIGNAL AND AN ORDER SIZE

610 — USE THE BURG METHOD TO DETERMINE THE COEFFICIENTS FOR THE AUTO-REGRESSIVE MODEL

430 — EXTRAPOLATE THE INPUT RADAR SIGNAL BASED ON THE AUTO-REGRESSIVE MODEL AND THE DETERMINED COEFFICIENTS TO OBTAIN AN EXTRAPOLATED SIGNAL

620 — CONVOLVE THE DETERMINED COEFFICIENTS AND A SECOND HALF OF THE NUMBER N OF SAMPLES TO OBTAIN AN INITIAL CONDITION FOR AN IIR FILTER

630 — LOAD THE IIR FILTER WITH THE INITIAL CONDITION

640 — USE THE IIR FILTER TO EXTRAPOLATE THE INPUT RADAR SIGNAL

**FIG. 6**

*700*

VECTOR PROCESSOR 750

EXTRAPOLATION

<u>760</u>

EXTRAPOLATED SIGNAL 770

DSP 720

PARAMETER

TRAINING

<u>730</u>

INPUT SIGNAL

710

740

**FIG. 7**

FIG. 8

Europäisches
Patentamt

European
Patent Office

Office européen
des brevets

# EUROPEAN SEARCH REPORT

Application Number

EP 24 16 4371

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAY S M ET AL: "SPECTRUM ANALYSIS-A MODERN PERSPECTIVE", PROCEEDINGS OF THE IEEE, IEEE. NEW YORK, US, vol. 69, no. 11, 1 November 1981 (1981-11-01), pages 1380-1419, XP001053647, ISSN: 0018-9219 * page 1380 * * page 1389 - page 1393 * * page 1396 * ----- | 1-15 | INV. G01S7/35 G01S13/72 G01S13/42 ADD. G01S13/34 G01S13/524 G01S13/931 |

**TECHNICAL FIELDS SEARCHED (IPC)**

G01S

The present search report has been drawn up for all claims

| Place of search | Date of completion of the search | Examiner |
|---|---|---|
| Munich | 18 June 2024 | Schmelz, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................................
& : member of the same patent family, corresponding
    document

EPO FORM 1503 03.82 (P04C01)